# EUROPÄISCHE PATENTSCHRIFT

(11) **EP 2 560 502 B1**
(45) Veröffentlichungstag und Bekanntmachung des Hinweises auf die Patenterteilung: **03.12.2014**
(21) Anmeldenummer: 11713195.3
(22) Anmeldetag: 07.04.2011
(51) Int. Cl.: A23G 9/06, A23G 9/20, A23G 9/48

(54) **VERFAHREN ZUR HERSTELLUNG VON SPEISEEIS**
METHOD FOR PRODUCING ICE CREAM
PROCÉDÉ POUR LA PRODUCTION DE CRÈME DE GLACE

(30) Priorität: 22.04.2010 DE 102010017928
(43) Veröffentlichungstag der Anmeldung: 27.02.2013
(73) Patentinhaber: Linde Aktiengesellschaft, 80331 München (DE)
(72) Erfinder: BERGHOFF, Rudolf, Erwin, 85716 Unterschleißheim (DE); SPINDELNDREHER, Lasse, 59823 Arnsberg (DE)
(74) Vertreter: Gellner, Bernd
(86) Internationale Anmeldenummer: PCT/EP2011/001739
(87) Internationale Veröffentlichungsnummer: WO 2011/131297

(56) Entgegenhaltungen:
- WO-A1-2005/031226
- DE-A1- 19 713 505
- DE-A1-102006 019 700
- US-A1- 2005 106 301
- US-B1- 6 510 890

## Beschreibung

Die Erfindung betrifft ein Verfahren zur Herstellung von Speiseeis aus Zutaten, wobei die Zutaten zu einem Premix vermengt werden und der Premix vorgefroren wird, wobei beim Vorfrieren dem Premix ein kryogenes Medium zugeführt wird und der Premix auf eine Temperatur unter 0 °C abgekühlt wird.

Bei der industriellen Speiseeisherstellung wird generell in mehreren Schritten vorgegangen. Zunächst werden die Zutaten oder zumindest ein Teil der Zutaten entsprechend der gewünschten Rezeptur zu einem sogenannten Premix vermengt. Der Premix wird dann homogenisiert und pasteurisiert, bevor er in Reifetanks zwischengelagert wird. Anschließend wird der Premix mit Luft aufgeschlagen und zu einer softeisähnlichen Konsistenz vorgefroren, in die gewünschten Portionseinheiten bzw. Gebinde abgefüllt und schließlich in einem Gefriertunnel tiefgefroren und gehärtet.

Das Aufschlagen und Vorgefrieren des Premixes erfolgt üblicherweise in sogenannten Doppelmantel-Kühlern. Der Premix wird in das Innere des Kühlers eingebracht und durch ein in dem Ringspalt des Doppelmantels strömendes Kältemittel gekühlt. Der Premix gefriert an der inneren Oberfläche des Kühlers und bildet eine dünne Eisschicht, die von einem sich im Inneren des Kühlers drehenden Kratzwerkzeug ständig abgekratzt wird. Dadurch wird der Wasseranteil im Premix zu kleinen Eiskristallen ausgefroren. Diese bestimmen wesentlich das Mundgefühl, die Cremigkeit und Textur des Speiseeises.

Bei diesem konventionellen Verfahren ist es bisher nicht möglich, dem Premix beispielsweise ganze Früchte, wie Beeren, größere Fruchtstücke oder Fruchtpartikel zuzugeben. Die Früchte oder Fruchtstücke würden durch das rotierende Kratzwerkzeug beschädigt und zu Fruchtmus zerkleinert werden bzw. die Staudüse am Ende des Kratzkühlers verstopfen. Auch das Einbringen gefrorener Fruchtstücke in den gefrorenen Premix am Ende des Kratzkühlers führt zu Deformationen der Fruchtstücke und der Eismasse. Fruchtstücke können daher bisher nach dem Aufschlagen und Vorgefrieren nur auf die Oberfläche des Speiseeises gestreut werden.

Aus der DE 10 2006 019 700 A1 ist ein Verfahren zur kryogenen Speiseeisherstellung bekannt. Hierbei erfolgt das Aufschlagen und Vorgefrieren des Premixes in einem Mischer, dem kryogener Stickstoff zugeführt wird. Der flüssige Stickstoff wird direkt in die Eismasse eingesprüht und kühlt diese soweit ab, dass sie gefriert. Hierbei verdampft der Stickstoff und durch die entstehenden Gasblasen wird die Eismasse gleichzeitig aufgeschlagen.

Auch mit diesem Herstellungsverfahren ist es bisher nicht möglich, stückige Zusätze, wie Fruchtstücke, in das Speiseeis einzubringen. Werden die Fruchtstücke nämlich dem Premix als weitere Zutat beigegeben, so setzen sich diese abhängig von der Viskosität des Premixes während des Vorgefrierens am Boden ab. Eine gleichmäßige Verteilung der Fruchtstücke in der Eismasse ist nicht oder kaum möglich.

Aufgabe vorliegender Erfindung ist es daher, ein Verfahren zur Herstellung eines Speiseeises aufzuzeigen, welches stückige Zusätze, insbesondere formsensible Stoffe, wie Fruchtstücke, enthält. Die stückigen Zusätze sollen unbeschädigt und möglichst gleichmäßig verteilt in dem Endprodukt vorliegen.

Diese Aufgabe wird durch ein Verfahren zur Herstellung von Speiseeis aus Zutaten gelöst, wobei die Zutaten zu einem Premix vermengt werden und der Premix vorgefroren wird, wobei beim Vorfrieren dem Premix ein kryogenes Medium zugeführt wird und der Premix auf eine Temperatur unter 0 °C abgekühlt wird, und welches dadurch gekennzeichnet ist, dass dem Premix während des Vorgefrierens stückige Zusätze zugegeben werden, welche vor der Zugabe zu dem Premix auf eine Temperatur zwischen -2°C und -7 °C abgekühlt wurden.

Das erfindungsgemäße Verfahren ermöglicht den Eintrag und die Einarbeitung von stückigen Zusätzen in Speiseeis.

Unter stückigen Zusätzen werden nicht-pastöse Massen, Feststoffe, Partikel, Teilchen oder stückige Produkte verstanden. Insbesondere sollen Zusätze erfasst werden, welche bei Umgebungsbedingungen, das heißt einer Temperatur von 20 °C und Normaldruck von 1 bar, unter dem Einfluss von äußeren mechanischen Kräften, insbesondere Druck- oder Scherkräften, leicht ihre Form verlieren oder beschädigt werden. Insbesondere sind solche Zusätze gemeint, die unter den in einem Kratzkühler zur Speiseeisherstellung herrschenden Bedingungen mechanisch zerstört werden. Zu stückigen Zusätzen im Sinne der Erfindung sind beispielsweise Früchte, Fruchtstücke, Nüsse oder Nußstücke zu zählen. Alle Arten von Zusätzen, die von der Schlagwelle des Kratzkühlers zerstört würden, den Kratzkühler beschädigen könnten oder die Staudüse am Ende des Kratzkühlers verstopfen würden, sind erfindungsgemäß als stückige Zusätze anzusehen. Im weiteren Sinne fallen hierunter nicht nur Lebensmittel, sondern auch Gegenstände, wie Überraschungsartikel oder Kleinspielzeug, welche in das Speiseeis eingebracht werden sollen.

Die stückigen Zusätze haben vorzugsweise eine Größe von mehr als 5 mm, bevorzugt zwischen 5 mm und 50 mm, besonders bevorzugt zwischen 10 mm und 25 mm. Das heißt, zumindest in einer Richtung haben die stückigen Zusätze eine Ausdehnung von mehr als 5 mm, bevorzugt zwischen 5 mm und 50 mm, besonders bevorzugt zwischen 10 mm und 25 mm.

Unter dem Begriff "Speiseeis" sollen im Folgenden für den Verzehr bestimmte Produkte verstanden werden, die aus einer Emulsion von Fett und Protein mit Zusatz anderer Zutaten oder aus einer Mischung von Wasser, Zucker und anderen Zutaten hergestellt, durch Gefrieren behandelt und in einen festen oder pastenartigen Zustand gebracht werden.

Speiseeis wird je nach Fettgehalt in verschiedene Kategorien eingeteilt. Je nach Fettgehalt darf das Eis als Milcheis (Fettgehalt unter 9%), Eiscreme (Fettgehalt über 10%) oder als Luxus- bzw. Premiumsorte (Fettgehalt 12-13%) deklariert werden. Das Fett kann tierischen oder pflanzlichen Ursprungs sein. Die Erfindung bezieht sich neben der Herstellung der genannten Arten Milcheis, Eiscreme und Luxus- bzw. Premiumsorten auch auf die Herstellung anderer Speiseeissorten, wie beispielsweise Sorbert, Sherbet, Joghurteis, Wassereis bzw. allgemein auf pastöse Massen, die im gefrorenen oder teilgefrorenen Zustand konsumiert werden.

Die Erfindung bezieht sich auf die eingangs beschriebene industrielle Speiseeisherstellung. Erfindungsgemäß werden die Zutaten für das Speiseeis zu dem sogenannten Premix miteinander vermengt. Der Premix wird gegebenenfalls homogenisiert und pasteurisiert und dann vorgefroren. Zum Vorfrieren wird dem Premix ein kryogenes Medium zugeführt, so dass der Premix mit dem kryogenen Medium in Berührung kommt. Beim Kontakt des kryogenen Mediums mit dem Premix verdampft oder sublimiert das kryogene Medium und entzieht dem Premix Wärme. Die dabei entstehenden, sehr kalten Gase kühlen den Premix weiter ab.

Durch den Einsatz kryogener Medien als Kühlmittel und durch den direkten Wärmeaustausch zwischen Premix und kryogenem Medium entstehen sehr hohe Gefriergeschwindigkeiten und damit stark verkürzte Gefrierzeiten. Auf diese Weise werden sehr kleine Mikroeiskristalle gebildet, wodurch das Mundgefühl und die Cremigkeit des Speiseeises verbessert werden.

Das kryogene Medium kann auf den Premix aufgesprüht oder, vorzugsweise, direkt in den Premix hineingeleitet werden. Von Vorteil wird das kryogene Medium von unten oder von der Seite direkt in den Premix eingesprüht. Beim Auftreffen des kryogenen Mediums auf den Premix verdampft oder sublimiert das kryogene Medium, wobei es zu einer starken Verwirbelung des Premixes kommt. Hierbei findet ein intensiver Wärmeaustausch statt. Das gasförmige kryogene Medium wird dabei mit dem Premix vermischt und sorgt damit gleichzeitig für das gewünschte Aufschlagen des Premix.

Erfindungsgemäß werden während des Vorgefrierens stückige Zusätze in den Premix eingebracht. Die Zusätze werden hierzu auf eine Temperatur von weniger als -2 °C abgekühlt und in dem abgekühlten Zustand dem Premix zugeführt. Hierdurch wird sichergestellt, dass die bereits teilgefrorene Eismasse bzw. teilgefrorenes Premix durch die zugeführten Zusätze nicht wieder erwärmt oder gar aufgetaut wird. Zudem wird durch das Vorkühlen der Zusätze deren Formbeständigkeit wesentlich erhöht, so dass diese in dem Premix nicht beschädigt werden. Auch feste Lebensmittelstücke oder Gegenstände, die in das Speiseeis erfindungsgemäß eingebracht werden sollen, werden vor dem Einbringen in den Premix vorgekühlt, um eine Erwärmung des Premixes zu vermeiden.

Von Vorteil werden die flüssigen, pastösen und nicht-stückigen Zutaten des Speiseeises, wie beispielsweise Wasser, Milch, Fett oder Zucker, zunächst zu einem Premix verarbeitet. Stückige Zusätze werden dem Premix anschließend in der erfindungsgemäßen Weise während des Vorgefrierens zugegeben.

Erfindungsgemäß werden die stückigen Zusätze vor ihrem Eintrag in den Premix auf eine Temperatur zwischen -2 °C und -7 °C abgekühlt. Dadurch wird sichergestellt, dass die Zusätze, wie oben beschrieben, keine unerwünschte Wärme in den Premix einbringen. Außerdem dürfen die Zusätze nicht zu kalt sein, da ansonsten Wasser an den Zusätzen kristallisieren und ausfrieren könnte. Der beanspruchte Temperaturbereich von -2 °C bis -7 °C hat sich insoweit als guter Kompromiss herausgestellt.

Die Zusätze sollen am Ende möglichst gleichmäßig in dem Speiseeis verteilt sein. Von Vorteil werden die stückigen Zusätze daher zu einem Zeitpunkt zu dem Premix gegeben, zu dem die Viskosität des Premix so groß ist, dass die Zusätze in dem Premix weder absinken noch aufsteigen. Vorzugsweise werden die dem Speiseeis zuzuführenden Zusätze in die Oberfläche des Premix über Rutschen oder Rohre eingetragen und mittels gegebenenfalls in dem Kühlvolumen vorhandenen, langsam laufenden Mischwerkzeugen gleichmäßig untergemischt.

Je nachdem welche Art Zusätze dem Premix zugegeben werden sollen, ist es günstig, wenn der Premix zu dem Zeitpunkt, zu dem die stückigen Zusätze zugegeben werden, eine Viskosität zwischen 300 mPa s und 2000 mPa s aufweist. Der Premix wird zunächst durch Zuführen des kryogenen Mediums soweit abgekühlt, bis dessen Viskosität in den oben genannten Bereich gestiegen ist. Erst dann werden die Zusätze zugegeben.

Der Zeitpunkt der Zugabe der stückigen Zusätze kann beispielsweise durch kontinuierliche Messung der Viskosität des Premix mittels eines Viskosimeters, das heißt eines Messgeräts zur Bestimmung der Zähigkeit des Premix, oder durch Messung der Leistungsaufnahme des Antriebsmotors der Mischwerkzeuge ermittelt werden. Sobald die Zähigkeit des Premix ausreichend groß ist, werden die Zusätze zugeführt.

Es ist auch möglich, einmalig den Zusammenhang zwischen Premixmenge, Zufluss (Menge, Dauer, Geschwindigkeit) an kryogenem Medium und Viskosität des Premix zu bestimmen. Anhand dieser Daten lässt sich dann bei einer gegebenen Menge an zu kühlendem Premix und bei einem bestimmten Zufluss an kryogenem Medium der Zeitpunkt ermitteln, zu dem die Viskosität in dem genannten Bereich liegt und die Zusätze zugegeben werden können. Dieser Zeitpunkt kann außerdem noch abhängig von der Größe, Form und Dichte der Zusätze näher bestimmt werden.

Von Vorteil wird als kryogenes Medium gasförmiger oder besonders bevorzugt flüssiger Stickstoff eingesetzt. Stickstoff ist ein inertes Gas und verdrängt den Sauerstoff in dem Behälter, in dem sich der Premix befindet. Dadurch werden oxidative Aroma- und Geschmacksveränderungen unterbunden und außerdem wirkt sich die sauerstoffarme, tiefkalte Umgebung hemmend auf das Wachstum von Mikroorganismen aus.

Grundsätzlich ist es auch möglich, Kohlendioxid, in gasförmiger, flüssiger oder fester Form, als kryogenes Medium einzusetzen. Kohlendioxid kann jedoch den pH-Wert der Eismasse verändern, so dass gasförmiger oder insbesondere flüssiger Stickstoff bevorzugt wird. Kohlendioxid kann jedoch auch gezielt zum Kühlen und Aufschäumen genutzt werden, um einen "Kribbeleffekt" beim Verzehren der Eismasse im Mund und auf der Zunge zu erzeugen.

Die Erfindung eignet sich insbesondere zum Einbringen von Fruchtstücken oder ganzen Früchten in Speiseeis. Erfindungsgemäß dem Premix zugegebene Früchte oder Fruchtstücke sind im Endprodukt Speiseeis unbeschädigt und gleichmäßig verteilt zu finden. Früchte oder Fruchtstücke, wie Kirschen, Erdbeeren, Brombeeren oder Himbeeren, bleiben ansehnlich. Eine Entmischung der Früchte von der restlichen Eismasse findet nicht statt.

Außer Früchten können auch andere genußsteigemde, verzehrfähige Lebensmittel, wie Schokolade, Kaugummis, Bonbons und ähnliches, erfindungsgemäß in das Eis gemischt werden. Nicht zuletzt eignet sich die Erfindung auch zum Einbringen von Nicht-Lebensmitteln, wie zum Beispiel Kleinspielzeug, in Speiseeis.

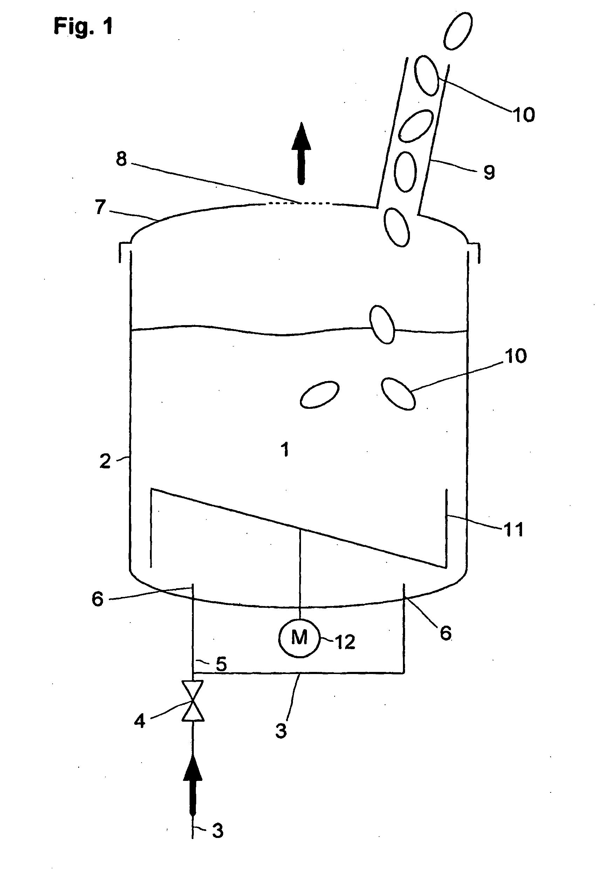

Die Erfindung sowie weitere Einzelheiten der Erfindung werden im Folgenden anhand von dem in der Zeichnung dargestellten Ausführungsbeispiel näher erläutert. Hierbei zeigt die

Figur eine Vorrichtung zur Durchführung des erfindungsgemäßen Verfahrens.

Die Erfindung betrifft ein Verfahren zur Speiseeisherstellung. Entsprechend der Speiseeisrezeptur werden alle oder ein Teil der flüssigen, pastösen oder nicht-stückigen Zutaten zu einem Premix verarbeitet. Zutaten, die in zumindest einer Raumrichtung größer als 10 mm sind, werden in dieser Phase dem Premix nicht zugegeben. Der Premix wird anschließend homogenisiert, pasteurisiert und gegebenenfalls zwischengelagert.

Zum Vorgefrieren wird der Premix 1 in einen Mischer 2 eingebracht, wie er in der Figur gezeigt ist. In dem Mischer 2 wird der Premix 1 durch direkten Wärmeaustausch mit einem Kältemittel gekühlt und vorgefroren. Hierzu wird über ein Bodeneintragsystem 3 flüssiger Stickstoff als Kältemittel in den Mischer 2 eingebracht. Das Bodeneintragssystem 3 weist eine Flüssigstickstoffzuführung 4 mit einem Regelventil 5 auf. Die Flüssigstickstoffzuführung 4 endet in einem oder mehreren Auslässen 6, die in das Innere des Mischers 2 ragen und über die eine definierte Menge flüssigen Stickstoffs direkt in die Premixmasse 1 injiziert werden kann. Die Auslässe 6 können, wie in der Figur gezeigt, im Boden des Mischers 2 angeordnet sein und/oder sich im bodennahen Bereich der Seitenwände des Mischers 2 befinden. Vorzugsweise sind ein bis zehn Auslässe 6, besonders bevorzugt zwei bis acht Auslässe 6 vorgesehen.

Der zugeführte flüssige Stickstoff kühlt den Premix 1, so dass dieser vorgefroren wird. Dabei verdampft der Stickstoff und das entstehende Stickstoffgas steigt in dem Premix 1 auf, wodurch dieser aufgeschlagen wird. Das Stickstoffgas verlässt den Mischer 2 über eine im Deckel 7 befindliche Austrittsöffnung 8.

Ferner ist im Mischer 2 ein sich langsam drehender Rührer 11 vorgesehen, der durch einen Motor 12 angetrieben wird. Der Rührer 11 wälzt den Premix 1 im Mischer 2 um, wodurch eine gleichmäßige Kühlung des Premix 1 durch den zugeführten flüssigen Stickstoff gewährleistet wird.

Der Deckel 7 weist schließlich ein Einspeiserohr 9 zur Zufuhr von stückigen Zusätzen 10 in den Premix 1 auf.

Nach dem Befüllen des Mischers 2 mit dem Premix 1 wird flüssiger Stickstoff über das Bodeneintragssystem 3 in den Premix 1 geleitet. Der Premix 1 wird dabei mittels des Rührers 11 umgewälzt, so dass der gesamte Premix 1 gleichmäßig mit dem Stickstoff in Kontakt kommt und gekühlt wird.

Der Premix 1 wird durch die Zufuhr flüssigen Stickstoffs soweit abgekühlt, bis dessen Temperatur unter 0 °C liegt und dessen Viskosität auf einen Wert zwischen 300 mPa s und 2000 mPa s gestiegen ist. Erst dann werden die Zusätze 10 zugegeben.

Die stückigen Zusätze 10 werden vor ihrem Eintrag in den Premix 1 auf eine Temperatur zwischen -3 °C und -5 °C abgekühlt. Dadurch wird gewährleistet, dass die Zusätze 10 zum einen keine unerwünschte Wärme in den Premix 1 einbringen und den Premix 1 antauen, zum anderen nicht zu kalt sind, wodurch Wasser oder andere Zutaten im Premix 1 kristallisieren und ausfrieren könnten.

Der genaue Zeitpunkt der Zugabe der Zusätze 10 wird in Abhängigkeit von der Größe, Form und Dichte der Zusätze 10 bestimmt. Die Zusätze 10 sollen sich nach dem Einbringen in den Premix 1 weder am Boden des Mischers 2 sammeln noch im Premix 1 nach oben steigen. Je nach Art der Zusätze 10 ergibt sich daher ein optimaler Viskositätsbereich für die Zugabe der Zusätze 10 zum Premix 1.

Die Viskosität des Premix 1 wird im vorliegenden Beispiel durch Messung der Leistungsaufnahme des Antriebsmotors 12 des Rührers 11 ermittelt. Sobald die Zähigkeit des Premix 1 ausreichend hoch ist, werden die Zusätze 10 zugeführt.

Eine vorgegebene Menge stückiger Zusätze 10, beispielsweise Fruchtstücke, wird über das Einspeiserohr 9 dem Mischer 2 zugeführt. Die Zusätze 10 fallen durch das Einspeiserohr 9 auf den Premix 1 und werden durch den Rührer 11 gleichmäßig in dem Premix 1 verteilt. Durch die Zufuhr weiteren flüssigen Stickstoffs wird der Premix 1 mit den gleichmäßig darin verteilten Zusätzen 10 vorgefroren.

## Patentansprüche

1. Verfahren zur Herstellung von Speiseeis aus Zutaten, wobei die Zutaten zu einem Premix (1) vermengt werden und der Premix (1) vorgefroren wird, wobei beim Vorfrieren dem Premix (1) ein kryogenes Medium zugeführt wird und der Premix (1) auf eine Temperatur unter 0 °C abgekühlt wird, **dadurch gekennzeichnet, dass** dem Premix (1) während des Vorgefrierens stückige Zusätze (10) zugegeben werden, welche vor der Zugabe zu dem Premix (1) auf eine Temperatur zwischen -2°C und -7 °C abgekühlt wurden.

2. Verfahren nach Anspruch 1, **dadurch gekennzeichnet, dass** die stückigen Zusätze (10) zu einem Zeitpunkt zu dem Premix (1) gegeben werden, zu dem die Viskosität des Premix (1) so groß ist, dass die Zusätze in dem Premix (1) weder absinken noch aufsteigen.

3. Verfahren nach einem der Ansprüche 1 oder 2, **dadurch gekennzeichnet, dass** der Premix (1) eine Viskosität zwischen 300 und 2000 mPa s aufweist, wenn die stückigen Zusätze (10) zugegeben werden.

4. Verfahren nach einem der Ansprüche 1 bis 3, **dadurch gekennzeichnet, dass** dem Premix (1) flüssiger Stickstoff als kryogenes Medium zum Vorgefrieren zugegeben wird.

5. Verfahren nach einem der Ansprüche 1 bis 4, **dadurch gekennzeichnet, dass** dem Premix (1) Fruchtstücke (10) zugegeben werden.

6. Verfahren nach einem der Ansprüche 1 bis 5, **dadurch gekennzeichnet, dass** dem Premix (1) Lebensmittelstücke (10) zugegeben werden.

7. Verfahren nach einem der Ansprüche 1 bis 6, **dadurch gekennzeichnet, dass** dem Premix (1) nicht verzehrfähige Zusätze (10) zugegeben werden.

8. Verfahren nach einem der Ansprüche 1 bis 7, **dadurch gekennzeichnet, dass** die stückigen Zusätze (10) größer als 5 mm sind, bevorzugt eine Größe zwischen 5 mm und 50 mm, besonders bevorzugt zwischen 10 mm und 25 mm, haben.

## Claims

1. Method for producing ice cream from ingredients, wherein the ingredients are mixed to form a premix (1) and the premix (1) is prechilled, wherein during the prechilling a cryogenic medium is fed to the premix (1) and the premix (1) is chilled to a temperature below 0°C, **characterized in that** piece-form additions (10) are added to the premix (1) during the prechilling, which additions (10), before being added to the premix (1), are chilled to a temperature between -2°C and -7°C.

2. Method according to Claim 1, **characterized in that** the piece-form additions (10) are added to the premix (1) at a time at which the viscosity of the premix (1) is so high that the additions neither sink nor rise in the premix (1).

3. Method according to either Claim 1 or 2, **characterized in that** the premix (1) has a viscosity between 300 and 2000 mPa s when the piece-form additions (10) are added.

4. Method according to any one of Claims 1 to 3, **characterized in that** liquid nitrogen is added to the premix (1) as cryogenic medium for the prechilling.

5. Method according to any one of Claims 1 to 4, **characterized in that** fruit pieces (10) are added to the premix (1).

6. Method according to any one of Claims 1 to 5, **characterized in that** food pieces (10) are added to the premix (1).

7. Method according to any one of Claims 1 to 6, **characterized in that** inedible additions (10) are added to the premix (1).

8. Method according to any one of Claims 1 to 7, **characterized in that** the piece-form additions (10) are larger than 5 mm, preferably have a size between 5 mm and 50 mm, particularly preferably between 10 mm and 25 mm.

## Revendications

1. Procédé de préparation de crème glacée à partir d'ingrédients, les ingrédients étant prémélangés pour produire un prémélange (1) et le prémélange (1) étant préalablement congelé, lors de la congélation préalable, un milieu cryogénique étant acheminé au prémélange (1) et le prémélange (1) étant refroidi à une température inférieure à 0°C, **caractérisé en ce que** pendant la congélation préalable, on ajoute des compléments en morceaux (10) au prémélange (1), lesquels sont refroidis à une température comprise entre -2°C et -7°C avant l'ajout au prémélange (1).

2. Procédé selon la revendication 1, **caractérisé en ce que** les compléments en morceaux (10) sont ajoutés au prémélange (1) à un instant auquel la viscosité du prémélange (1) est suffisamment élevée pour que les compléments ne coulent pas mais ne flottent pas non plus dans le prémélange (1).

3. Procédé selon l'une quelconque des revendications 1 ou 2, **caractérisé en ce que** le prémélange (1) présente une viscosité entre 300 et 2000 mPa s au moment de l'ajout des compléments en morceaux (10).

4. Procédé selon l'une quelconque des revendications 1 à 3, **caractérisé en ce que** l'on ajoute de l'azote liquide en tant que milieu cryogénique au prémélange (1) pour la congélation préalable.

5. Procédé selon l'une quelconque des revendications 1 à 4, **caractérisé en ce que** l'on ajoute au prémélange (1) des morceaux de fruits (10).

6. Procédé selon l'une quelconque des revendications 1 à 5, **caractérisé en ce que** l'on ajoute au prémélange (1) des morceaux d'aliments (10).

7. Procédé selon l'une quelconque des revendications 1 à 6, **caractérisé en ce que** l'on ajoute au prémélange (1) des compléments (10) non prêts à la consommation.

8. Procédé selon l'une quelconque des revendications 1 à 7, **caractérisé en ce que** les compléments en morceaux (10) mesurent plus de 5 mm, de préférence présentent une taille comprise entre 5 mm et 50 mm, particulièrement de préférence entre 10 mm et 25 mm.
